# EUROPEAN PATENT APPLICATION

(11) **EP 4 783 299 A1**
(43) Date of publication of application: **29.07.2026**
(21) Application number: 25154533.1
(22) Date of filing: 28.01.2025
(51) Int. Cl.: H01M 10/54, H01M 10/613

(54) **METHOD FOR PROCESSING BATTERIES**

(71) Applicant: BASF SE, 67056 Ludwigshafen am Rhein (DE)
(72) Inventor: NOACK, Markus, 01987 Schwarzheide (DE)
(74) Representative: Maiwald GmbH

(57) **Abstract**

Disclosed is a method for processing batteries, the method comprising deactivating batteries by cooling of the batteries, wherein the cooling comprises ultradeep cooling of the batteries.

## Description

### TECHNICAL FIELD

Disclosed are a method for processing batteries and a system configured to carry out the method.

### TECHNICAL BACKGROUND

Processing batteries, particularly at their end of life, is challenging. However, for the purpose of recycling, processing of batteries to prepare them for steps such as black mass production. Processing of batteries often involves measures like deep discharge of the batteries and short-circuiting to allow for safe further processing. However, such measures can be challenging in terms of handling the batteries and require time and resources.

It is therefore an object of the present disclosure to provide an improved method and system for processing batteries, particularly at their end of life.

### SUMMARY OF THE INVENTION

The present disclosure provides a method for processing batteries, the method comprising deactivating batteries by cooling of the batteries, wherein the cooling comprises ultradeep cooling of the batteries.

Deactivating the batteries, in this context, means that chemical reactions in the batteries are prevented and/or the chemical reactions are slowed down to below a predetermined threshold reaction speed. Deactivation will occur at a temperature that may be referred to as deactivation temperature.

Ultradeep cooling, in the present disclosure, may be considered to be cooling to the deactivation temperature of batteries and/or below. Examples for temperature ranges are provided further below. Devices or means that may be employed for the cooling are provided below.

According to the present disclosure, batteries may be cooled down to a temperature where the chemical reactions that would otherwise generate electricity and/or heat are prevented. This allows for avoiding an unsafe state, which may be created if the reactions occur in an uncontrolled manner, particularly during storage and/or transport and/or mechanical treatment of batteries. As such, cooling renders the batteries to be in a safe state. At present, such safe states are often achieved by discharging and short-circuiting batteries. However, it may not always be possible to carry out these steps prior to transport and/or storage and/or mechanical treatment, for example because the required systems may not be available. Moreover, the steps may require much processing time and effort.

The present disclosure further provides a method for use in battery recycling, particularly a battery recycling method, comprising the method for processing the batteries of the present disclosure and further comprising mechanical processing of the cooled batteries. In particular, the mechanical processing may be applicable to one or more of, in particular a mix of: fully discharged batteries, partly discharged batteries, charged batteries, short-circuited batteries, and non-short-circuited batteries.

The present disclosure further provides a system configured to carry out the method of the present disclosure, the system comprising cooling equipment, in particular electrical cooling equipment, such as electrical compression cooling equipment, and/or liquid nitrogen cooling equipment, such as immersion equipment, a cooling tower and/or a cooling tunnel.

Cooling batteries allows for very flexibly bringing batteries in a safe state, i.e. equipment may not need to be very specialized. Cooling can be carried out with different cooling techniques and may involve methods that can be implemented relatively easily and optionally flexibly at different locations. At the same time, it may provide very reliable deactivation of the batteries, for example at their end of life and prior/in preparation for recycling. This ensures safety without requiring steps like discharging the batteries and/or short circuiting the batteries. This reduces handling effort and need for time and specialized equipment for discharging and/or short circuiting. Cooling may be incorporated into storage and/or transport, allowing to at the same time render and keep the batteries in a safe state at low additional handling and processing effort and time, while at the same time ensuring safety of storage and/or transport. It is also possible to verify, with low effort, that batteries are in a safe state by determining temperature.

As such, an improved method and system for processing batteries, particularly at their end of life, may be provided. The method and system of the present disclosure address at least some of the above-described challenges.

According to the present disclosure, the cooling of the batteries may comprise cooling by means of electrical cooling equipment, in particular electrical compression cooling equipment.

Cooling by means if electrical cooling equipment is also referred to as electrical cooling hereinbelow.

The use of electrical cooling equipment is, in many applications, sufficient for cooling the batteries for deactivation. In some cases, electrical cooling cools the batteries down to such a degree that further cooling, such as liquid nitrogen cooling, is only needed for a smaller temperature change. In both cases, the cooling requires less effort in terms of infrastructure and cooling times than mere use of liquid nitrogen cooling, for example. Electrical cooling is particularly suitable for cooling batteries while being stored or transported, e.g. contrary to nitrogen cooling, making the method particularly flexible.

According to the present disclosure, cooling by means of the electrical cooling equipment may comprise cooling by electrical shock frosting, such as by a compressor and/or fan, and/or cooling by storing the batteries in an actively cooled cooling environment, such as an actively cooled chamber and/or an actively cooled cooling container and/or an actively cooled storage facility.

Electrical shock frosting may be particularly efficient when processing, such as mechanical processing, is to be carried out shortly after cooling. For example, it may allow for avoiding bottlenecks in an overall processing process due to the cooling.

Cooling in a an actively cooled environment allows for storage and/or transport of the batteries in a safe, i.e., deactivated state. Moreover, it may allow for gradual cooling down of the batteries, which is sufficient if the cooling is not a bottleneck in an overall process and may require less specialized hardware and/or reduce spikes in energy consumption for the cooling.

According to the present disclosure, the cooling of the batteries may comprise liquid nitrogen cooling.

Liquid nitrogen cooling may allow for easier cooling of the batteries to lower temperatures than cooling by electrical equipment. Moreover, it may allow for quick cooling. Low temperatures may be particularly useful for causing embrittlement of materials in preparation for further processing steps that aim at breaking up said materials, making the further processing steps easier and/or more efficient. At the same time, batteries may keep cooler for a longer time during processing having been cooled to lower temperatures, which in turn makes subsequent processing easier, as less precautions need to be taken in terms of ensuring batteries remaining deactivated. As such, subsequent processing may overall be improved.

According to the present disclosure, the cooling of the batteries may be a multi-step cooling process comprising cooling by means of electrical cooling equipment and subsequent liquid nitrogen cooling.

This may be advantageous considering that the advantages of electrical cooling equipment as described above can be leveraged, as well as the advantages of liquid nitrogen cooling, while also addressing some challenges of nitrogen cooling, such as lack of flexibility and potentially lack of infrastructure. For example, it may allow to only require nitrogen cooling infrastructure at the site of loading the batteries for transport and/or at the site of further processing the deactivated batteries, while at other times/places, e.g. during transport and/or storage, such infrastructure may not be required.

According to the present disclosure, the liquid nitrogen cooling may be carried out by means of immersion equipment, a cooling tower and/or a cooling tunnel.

Immersion equipment may comprise one or more devices configured to immerse a battery in cooling fluid, for example in liquid nitrogen, and/or retrieve the battery from the cooling fluid. Optionally, immersion equipment may be configured to handle batteries prior to and/or after immersion in the cooling fluid, for example to unload batteries from storage and/or from transport boxes prior to immersing them in cooling fluid and/or to load batteries into storage and/or transport boxes and/or to pass batteries on to further processing steps after retrieving them from the cooling fluid.

A cooling tower and/or a cooling tunnel may be configured to move multiple batteries through cooling areas.

Immersion equipment may allow for relatively high flexibility and low infrastructural requirements, whereas cooling towers or tunnels may allow for high throughput.

According to the present disclosure, the cooling of the batteries may comprise cooling by means of electrical cooling equipment to a first temperature T1, in particular wherein the first temperature T1 is equal to or below -40°C and equal to or above -90°C, in particular equal to or below -50°C and equal to or above -90°C, equal to or below -60°C and equal to or above -90°C, in particular equal to or below -70°C and equal to or above -86°C.

These temperatures may still be reached efficiently with electrical cooling equipment and also put the batteries in a deactivated and safe state. The lower temperatures may be more difficult or less efficient to achieve with electrical cooling equipment, yet they may offer advantages for further processing of the cooled batteries. As such, the temperature ranges above provide a good balance between cooling efficiency and advantages associated with low temperatures.

According to the present disclosure, the cooling of the batteries may comprise liquid nitrogen cooling to a second temperature T2, in particular, wherein the second temperature is equal to or below -60°C, in particular equal to or below -70°C, in particular equal to or below -80°C.

Liquid nitrogen may be particularly useful for cooling to particularly low temperatures, which may have the advantages described above, e.g. for further processing, in a fast and efficient manner.

According to the present disclosure, the cooling of the batteries may comprise the cooling by means of the electrical cooling equipment to the first temperature T1 and subsequent nitrogen cooling from the first temperature T1 to the second temperature T2.

As described above, a multi-step cooling may combine advantages of electrical and nitrogen cooling, while addressing some of their respective challenges. The temperature ranges described above allow for bringing the batteries into a deactivated state, i.e., a safe state, with the advantages described above associated with electrical cooling. The second temperature ranges potentially allow for improved subsequent processing with the advantages described above for liquid nitrogen cooling. Particularly, temperature ranges that are harder to reach by electrical cooling in terms of efficiency and/or speed, may thus be achieved using the liquid nitrogen cooling. As explained above, some temperature ranges may still be achieved rather efficiently by electrical cooling, but this may depend on the equipment used and the processes involved. Thus, depending on the case at hand, the temperature T1 may be higher or lower, for example based on the kind of equipment available and/or processes involved. In terms of potential variations between (target) temperatures T1 or T2 and actual temperatures, a greater deviation may be allowed for T1 than T2, as long as it can be ensured that deviations from T2 can be kept in an acceptable range in spite of the deviations of T1.

According to the present disclosure, the cooling of the batteries may comprise cooling to a battery transport temperature, the battery transport temperature particularly being equal to or below -50°C and equal to or above - 70°C, equal to or below -55°C and equal to or above -65°C, particularly equal to -60°C, in particular, wherein the battery transport temperature equals the first temperature T1. The method may, in particular, comprise maintaining the batteries at the transport temperature or below, particularly during transport of the batteries.

Battery transport temperatures, such as the examples provided above, may be temperatures that allow for safe transport of the batteries. In particular, these may be temperatures that ensure that the batteries are deactivated and will remain deactivated under predetermined assumptions about transport conditions. As such, transport temperatures may be below deactivation temperatures. This may allow for remaining in safe temperature ranges in case cooling fails temporarily. The transport temperatures may also be above a target temperature for subsequent processing. This may allow for reduced power consumption, which may be particularly important during transport, where power supply may be limited.

According to the present disclosure, the cooling to the battery transport temperature may comprise cooling in a cooling container, particularly a shipping container for transporting batteries.

Cooling in a cooling container allows for reliable and controlled cooling that is independent on external cooling infrastructure. As such, it is particularly suitable for transport. Moreover, in scenarios where transport in shipping containers is required, it may be advantageous to leverage the transport in containers for cooling the batteries avoiding additional resource usage.

According to the present disclosure, the cooling of the batteries may comprise cooling to a embrittlement temperature, the embrittlement temperature particularly being equal to or below -60°C, in particular equal to or below -65°C, in particular equal to or below -70°C, in particular, wherein the battery embrittlement temperature equals the second temperature T2 and/or wherein cooling by means of electrical cooling equipment and subsequent liquid nitrogen cooling is used to cool to the embrittlement temperature.

As already explained above, processing of cooled batteries may often involve breaking up materials, such as plastic-based materials. These processes can be made easier and more efficient by leveraging the cooling process for embrittling said materials. Accordingly, cooling to temperatures somewhat below deactivation temperatures may allow for overall improved efficiency. As explained above, advantages of combining electrical cooling and liquid nitrogen cooling may be combined and their respective challenges mitigated when combining them in a multi-step cooling process. In particular, a liquid nitrogen cooling after an electrical cooling may efficiently cool down the materials to embrittlement temperatures. It is noted that the embrittlement temperature range may depend on the material to be broken up, yet the temperatures provided above will suffice for the materials common in the field.

According to the present disclosure, the cooling of the batteries may be performed to a temperature of -40°C or below, in particular to -60°C or below, in particular to a temperature of -70°C or below, in particular to a temperature of -80°C or below, in particular to a temperature for transport and/or storage and/or mechanical treatment of the cooled batteries, such as in the course of battery recycling.

Temperatures of -40°C allow for deactivating batteries. As described above, further cooling down the batteries may have different advantages, such as embrittlement for further processing the batteries, for allowing for temporary failure of energy supply during electrical cooling and/or ensuring that batteries will remain deactivated during subsequent processing, e.g. mechanical treatment of the cooled batteries. This reflected in the temperature ranges.

According to the present disclosure, the cooling of the batteries may comprise cooling of fully discharged batteries, partly discharged batteries, charged batteries, short-circuited batteries, and non-short-circuited batteries.

Since the batteries are deactivated by cooling, it is not necessary to take care that the batteries are fully discharged and/or short circuited. Storage, transport, and subsequent processing, thus, can be reliably safe irrespective of the charge and/or short circuit state of the batteries. This may also increase overall flexibility and efficiency, as it is not necessary to separate batteries and/or check their state and/or carry out discharging and/or short circuiting. According to the present disclosure, the cooling of the batteries may comprise cooling of lithium-ion battery products, particularly for user electronics such as e-cigarettes, electrical toothbrush, home appliances, smartphone, tablet, notebooks.

According to the present disclosure, the cooling of the batteries may comprise cooling of battery systems, particularly automotive battery systems, power tool battery systems, e-bike battery systems, e-scooter battery systems, e-bike battery systems.

According to the present disclosure, the cooling of the batteries may comprise cooling of battery modules comprising a plurality of battery cells.

According to the present disclosure, the cooling of the batteries may comprise cooling of battery cells, such as prismatic cells, pouch cells, round cells.

According to the present disclosure, the cooling of the batteries may comprise cooling of fully discharged batteries, partly discharged batteries, charged batteries, short-circuited batteries, and non-short-circuited batteries, a mix thereof, and/or a set of batteries with at least partially unknown charge state.

According to the present disclosure, the cooling of the batteries may comprise cooling of damaged batteries, a mix of damaged and undamaged batteries, and/or a set of batteries with at least partially unknown damage status.

Thus, it will be understood that the method has high flexibility and requires no effort and infrastructure for sorting batteries and/or different treatments for different batteries, while reliably ensuring safety.

### BRIEF DESCRIPTION OF THE DRAWINGS

In the following, the present disclosure is further described with reference to the enclosed figures:
The following embodiments are mere examples and shall not be considered limiting.
- Figure 1: shows a system according to the present disclosure.
- Figure 2: shows another system according to the present disclosure.
- Figure 3: illustrates a method for processing batteries according to the present disclosure.
- Figure 4: illustrates a method for use in battery recycling according to the present disclosure.

### DETAILED DESCRIPTION OF EMBODIMENTS

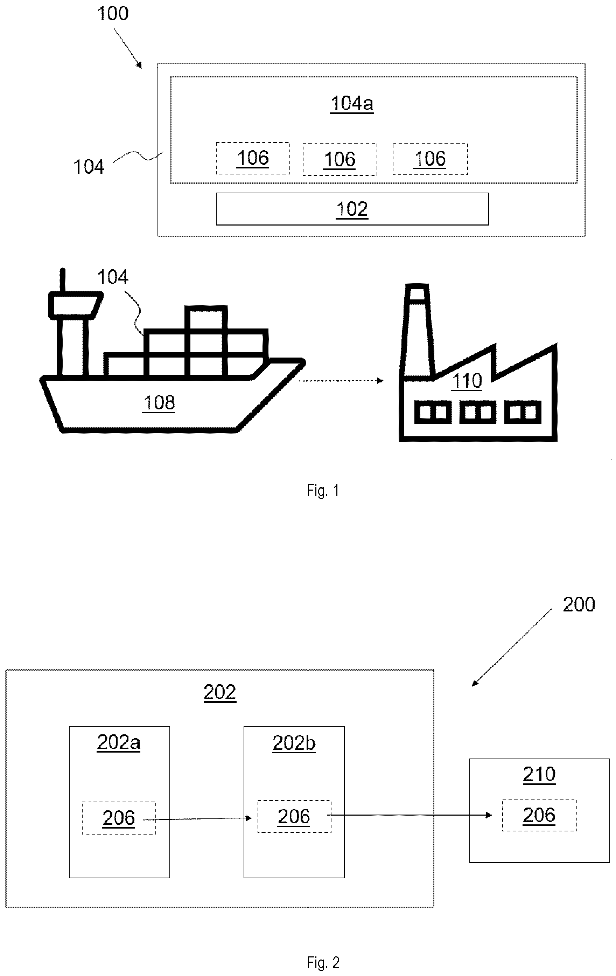

In Figure 1, an exemplary system 100 according to the present disclosure is shown, the system comprising cooling equipment 102. In this example, the cooling equipment is electrical cooling equipment.

Merely for the sake of illustration, the cooling equipment is formed integrally with a shipping container 104, wherein the cooling equipment cools the inside 104a of the shipping container. Alternatively, cooling equipment may be separate from the container, for example attached to the shipping container and/or arranged on the inside of the shipping container.

For illustrative purposes, batteries 106 are shown, located inside the shipping container for transport.

An optional transportation means 108 is shown, to illustrate that the cooling equipment may cool the batteries for transport. Moreover, optional processing equipment 110, such as for mechanical processing of the cooled batteries for recycling, is shown.

In Figure 2, an exemplary system 200 according to the present disclosure is shown, the system comprising cooling equipment 202. The cooling equipment comprises electrical cooling equipment 202a and liquid nitrogen cooling equipment 202b.

The liquid nitrogen cooling equipment, in the present example, is shown as immersion equipment. Alternatively, a cooling tower or cooling tunnel may be used, among others.

For illustrative purposes batteries 206 are shown at the electrical cooling equipment and at the liquid nitrogen cooling equipment.

Moreover, optional processing equipment 210, such as for mechanical processing of the cooled batteries for recycling, is shown.

In Figure 1 or 2, the electrical cooling equipment may comprise electrical compression cooling equipment such as vapor-compression cooling. Alternatively, other electrical cooling equipment, such as thermoelectric cooling equipment, may be used.

The systems of Figure 1 or Figure 2 may be employed for carrying out the method of the present disclosure.

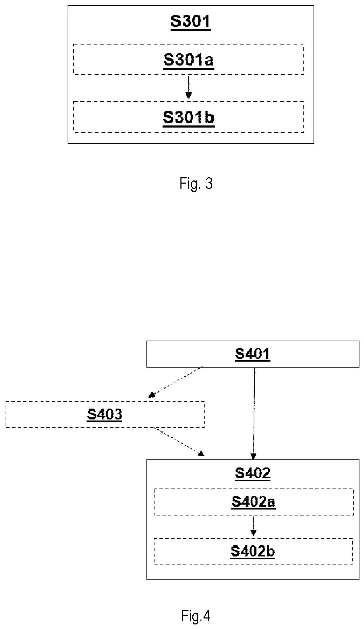

In Figure 3, a method for processing batteries according to the present disclosure is illustrated.

The method comprises, in step S301, deactivating batteries by cooling of the batteries, wherein the cooling comprises ultradeep cooling of the batteries.

The cooling in this example comprises cooling by electrical cooling equipment S301a. Optionally, in addition to the cooling by electrical cooling equipment, the method may comprise liquid nitrogen cooling S301b.

In Figure 4, a method for use in battery recycling according to the present disclosure is illustrated.

The method comprises a cooling S401 of the batteries, for example as outlined in the context of Figure 3 in step S301, particularly S301a and/or S301b. Subsequently, the method comprises a mechanical processing S402 of the cooled batteries. In particular, the mechanical processing may comprise shredding S402a. Optionally, the mechanical processing may comprise separating of battery components S402b, particularly after carrying out cooling to so as to embrittle some of the materials used in the battery.

The method may comprise transporting S403 the batteries prior to mechanical processing, particularly while being cooled. Optionally, during the transporting, the batteries may be located and cooled inside the shipping container 104 described in the context of Figure 1. For transporting, for example, transportation means 108 may be used.

The methods described in Figures 3 and 4 may, respectively, be carried out for any of, particularly a mix of fully discharged batteries, partly discharged batteries, charged batteries, short-circuited batteries, and non-short-circuited batteries. Due to the batteries being cooled, the charge state is not critical for safety of transport and storage.

The methods described in Figures 3 and 4 may be carried out using the system of the present disclosure, particularly the system outlined in the context of Figure 1 or Figure 2.

The present disclosure has been described in conjunction with preferred embodiments and examples as well. However, other variations can be understood and effected by those persons skilled in the art and practicing the claimed invention, from the studies of the drawings, this disclosure, and the claims. Notably, unless otherwise specified, the any steps presented can be performed in any order, i.e., the present invention is not limited to a specific order of these steps. Moreover, unless specified otherwise, it is also not required that the different steps are performed at a certain place or at one computing device of a distributed system, i.e., each of the steps may be performed at different computing devices.

## Claims

1. A method for processing batteries, the method comprising
deactivating batteries by cooling of the batteries (S301, S401), wherein the cooling comprises ultradeep cooling of the batteries.

2. The method of claim 1, wherein the cooling of the batteries comprises cooling by means of electrical cooling equipment (S301a), in particular electrical compression cooling equipment.

3. The method of claim 2, wherein cooling by means of the electrical cooling equipment comprises cooling by electrical shock frosting, such as by a compressor and/or fan, and/or cooling by storing the batteries in an actively cooled cooling environment, such as an actively cooled chamber and/or an actively cooled cooling container and/or an actively cooled storage facility.

4. The method of any of the preceding claims, wherein the cooling of the batteries comprises liquid nitrogen cooling (S301b).

5. The method of claim 4, wherein the cooling of the batteries is a multi-step cooling process comprising cooling by means of electrical cooling equipment (S301a) and subsequent liquid nitrogen cooling (S301b).

6. The method of claim 4 or claim 5, wherein the liquid nitrogen cooling is carried out by means of immersion equipment, a cooling tower and/or a cooling tunnel.

7. The method of any of the preceding claims, wherein the cooling of the batteries comprises cooling by means of electrical cooling equipment to a first temperature T1, in particular wherein the first temperature T1 is equal to or below -40°C and equal to or above -90°C, in particular equal to or below -50°C and equal to or above -90°C, equal to or below -60°C and equal to or above -90°C, in particular equal to or below -70°C and equal to or above -86°C.

8. The method of any of the preceding claims, wherein the cooling of the batteries comprises liquid nitrogen cooling to a second temperature T2, in particular, wherein the second temperature is equal to or below -60°C, in particular equal to or below -70°C, in particular equal to or below -80°C.

9. The method of claims 7 and 8, wherein the cooling of the batteries comprises the cooling by means of the electrical cooling equipment to the first temperature T1 and subsequent nitrogen cooling from the first temperature T1 to the second temperature T2.

10. The method of any of the preceding claims, wherein the cooling of the batteries comprises cooling to a battery transport temperature, the battery transport temperature particularly being equal to or below -50°C and equal to or above -70°C, equal to or below -55°C and equal to or above -65°C, particularly equal to -60°C, in particular, wherein the battery transport temperature equals the first temperature T1.

11. The method of any of the preceding claims, wherein the cooling to the battery transport temperature comprises cooling in a cooling container, particularly a shipping container for transporting batteries.

12. The method of any of the preceding claims, wherein the cooling of the batteries comprises cooling to a embrittlement temperature, the embrittlement temperature particularly being equal to or below -60°C, in particular equal to or below -65°C, in particular equal to or below -70°C, in particular, wherein the battery embrittlement temperature equals the second temperature T2 and/or wherein cooling by means of electrical cooling equipment and subsequent liquid nitrogen cooling is used to cool to the embrittlement temperature.

13. The method of any the preceding claims, wherein the cooling of the batteries is performed to a temperature of
-40°C or below, in particular to -60°C or below, in particular to a temperature of -70°C or below, in particular to a temperature of -80°C or below, in particular to a temperature for transport and/or storage and/or mechanical treatment of the cooled batteries, such as in the course of battery recycling.

14. The method of any of the preceding claims, wherein the cooling of the batteries comprises cooling of at least one of:
lithium-ion battery products, particularly for user electronics such as e-cigarettes, electrical toothbrush, home appliances, smartphone, tablet, notebooks; and/or
battery systems, particularly automotive battery systems, power tool battery systems, e-bike battery systems, e-scooter battery systems, e-bike battery systems; and/or
battery modules comprising a plurality of battery cells; and/or
battery cells, such as prismatic cells, pouch cells, round cells; and/or
fully discharged batteries, partly discharged batteries, charged batteries, short-circuited batteries, and non-short-circuited batteries, a mix thereof, and/or a set of batteries with at least partially unknown charge state; and/or
damaged batteries, a mix of damaged and undamaged batteries, and/or a set of batteries with at least partially unknown damage status.

15. A method for use in battery recycling comprising the method of any of the preceding claims and mechanical processing (S402) of the cooled batteries, in particular, wherein the mechanical processing is applicable to one or more of, in particular a mix of: fully discharged batteries, partly discharged batteries, charged batteries, short-circuited batteries, and non-short-circuited batteries.

16. A system (100, 200) configured to carry out the method of any of the preceding claims, the system comprising cooling equipment (102, 202), in particular electrical cooling equipment (202a), such as electrical compression cooling equipment, and/or liquid nitrogen cooling equipment (202b), such as immersion equipment, a cooling tower and/or a cooling tunnel.
